# EUROPÄISCHE PATENTSCHRIFT

(11) **EP 1 649 355 B1**
(45) Veröffentlichungstag und Bekanntmachung des Hinweises auf die Patenterteilung: **25.04.2007**
(21) Anmeldenummer: 03818376.0
(22) Anmeldetag: 29.07.2003
(51) Int. Cl.: G06F 3/14, G09F 27/00

(54) **Verfahren und System zur Darstellung von digitalen Anzeigeelementen**
Method and system for presenting digital display elements
Procédé et système pour afficher des informations numériques

(43) Veröffentlichungstag der Anmeldung: 26.04.2006
(73) Patentinhaber: INFOSCREEN Gesellschaft für Stadtinformationsanlagen mbH, 81379 München (DE)
(72) Erfinder: ERFORT, Markus, 80993 München (DE); MAIR, Helmut, 81377 München (DE); SCHWEYER, Ralph, 81479 München (DE); THIEL, Thomas, 83125 Eggstätt (DE)
(74) Vertreter: Weidener, Jörg Michael
(86) Internationale Anmeldenummer: PCT/EP2003/008366
(87) Internationale Veröffentlichungsnummer: WO 2005/022376

(56) Entgegenhaltungen:
- US-A1- 2002 007 987
- US-B1- 6 288 688

## Beschreibung

Die Erfindung betrifft ein Verfahren zur Darstellung von digitalen Anzeigeelementen nach dem Oberbegriff des Anspruchs 1.

Die vorliegende Erfindung betrifft den Bereich der digitalen Informationssysteme, bei denen Texte, Bilder und Videos oder akustische Informationen als Anzeigeelemente mit Hilfe von Computern auf Displays dargestellt oder angezeigt bzw. auf einer akustischen Anzeigeeinrichtung ausgegeben werden, und zwar in einer aufeinander abgestimmten Art und Weise. Die Texte, Bilder und Videos liegen dabei für die Anzeige überwiegend oder ausschließlich in digitaler Form vor. Für die Darstellung von digitalen Anzeigeelementen auf einer Anzeigeeinrichtung, wie einem Display, ist es zunächst erforderlich, daß von einer Anzeige-Rechnereinrichtung, also einem dem Display zugeordneten (Multimedia)Rechner mit einer entsprechenden Software, die darzustellenden digitalen Informationen in Signale für die Anzeigeeinrichtung umgewandelt werden. Diese Signale liegen in der Regel in einem Graphikkarten- und/oder Akustikkarten-Format vor, Ist vorgesehen, daß mehrere Anzeigeeinrichtungen zum selben Zeitpunkt dieselben digitalen Informationen anzeigen, so reicht es aus, daß das von der Anzeige-Rechnereinrichtung erzeugte Bild und/oder Tonsignal über sogenannte Y-Weichen vervielfältigt und an die mit der Anzeige-Rechnereinrichtung verbundenen Anzeigeeinrichtungen übertragen wird.

Die zeitlich koordinierte, d.h. aufeinander abgestimmte Darstellung digitaler Anzeigeelemente auf einer Mehrzahl von Anzeigeeinrichtungen, die alle mit der zugeordneten Anzeige-Rechnereinrichtung verbunden sind, ist jedoch wesentlich aufwendiger. Neben der Umwandlung der darzustellenden digitalen Anzeigeelemente in Bild- und/oder Tonsignale für die mit der Anzeige-Rechnereinrichtung verbundenen Anzeigeeinrichtungen ist es notwendig, die zeitliche Abfolge der Signale und die Zieladresse vorzugeben, die einzuhalten ist, um eine zeitlich und/oder räumlich koordinierte Darstellung der darzustellenden Informationen auf den jeweiligen Anzeigeeinrichtungen sicherzustellen.

Ist nun vorgesehen, eine Mehrzahl von unterschiedlichen digitalen Anzeigeelementen zu unterschiedlichen Zeitpunkten auf den mit der Anzeige-Rechnereinrichtung verbundenen Anzeigeeinrichtungen darzustellen, so müssen gemäß dem bekannten Stand der Technik die zur Darstellung vorgesehenen Anzeigeelemente zusammen mit den jeweiligen den Darstellungszeitpunkt und/oder -ort festlegenden Informationen von der Anzeige-Rechnereinrichtung zur Erstellung eines Zeitablaufplanes ausgewertet werden. Aus dem Zeitablaufplan geht hervor, welche darzustellende Information zu welchem Zeitpunkt auf welcher Anzeigeeinrichtung und/oder in welcher Art dargestellt werden soll.

Die Festlegung bzw. Steuerung der zeitlichen Abfolge der auf den jeweiligen Anzeigeeinrichtungen darzustellenden Anzeigeelemente, vor allem aber die Generierung der Bild- und/oder Tonsignale erfordert einen hohen Rechenaufwand. Der hohe Rechenaufwand führt dazu, daß die Bildqualität bzw. die Auflösung der auf einer Anzeigeeinrichtung dargestellten Anzeigeelemente sehr stark begrenzt ist. Werden Anzeige-Rechnereinrichtungen mit einer hohen Rechenleistung eingesetzt, führt dies zu höheren Investitionskosten.

Aus der US 2002/0007987, die den nächstliegenden Stand der Technik darstellt, ist ein System zur zeitgesteuerten Aufschaltung von Bild- und Tondaten auf mehreren Anzeigevorrichtungen bekannt. Daten und Aufschaltzeitpunkte werden von einem zentralen Rechner über einen Verteilerrechner an mehrere Anzeigerechner übertragen. Der Anzeigerechner oder der Verteilerrechner führt dann eine zeitgesteuerte Aufschaltung durch.

Aufgabe der vorliegenden Erfindung ist es, ein Verfahren zur Darstellung digitaler Anzeigeelemente zur Verfügung zu stellen, mit dem es einfach und kostengünstig möglich ist, die Anzeigeelemente auf einer Mehrzahl von Anzeigeeinrichtungen mit hoher Genauigkeit zeitlich aufeinander abgestimmt darzustellen.

Zur Lösung der vorgenannten Aufgabe ist das Verfahren gemäß Anspruch 1 vorgesehen.

Abweichend zu den bekannten Verfahren zur zeitlich und/oder räumlich koordinierten Darstellung von Anzeigeelementen auf einer Mehrzahl von Anzeigeeinrichtungen ist es erfindungsgemäß zunächst vorgesehen, daß die Festlegung der zeitlichen Abfolge der koordiniert auf einer Mehrzahl von Anzeigeeinrichtungen darzustellenden digitalen Anzeigeelemente und die Umwandlung der darzustellenden Informationen in Eingangssignale für die jeweiligen Anzeigeeinrichtungen sowohl programmtechnisch getrennt als auch hardwaretechnisch bevorzugt getrennt auf zwei unterschiedlichen Rechnereinrichtungen erfolgt. Dies hat den Vorteil, daß die Rechenkapazität, die zur Generierung von Steuerbefehlen zur Festlegung der zeitlich koordinierten Abfolge der darzustellenden digitalen Anzeigeelemente auf den jeweiligen Anzeigeeinrichtungen notwendig ist, von der Steuer-Rechnereinrichtung bereit gestellt wird, während die Rechenkapazität der Anzeige-Rechnereinrichtung in vollem Umfang genutzt werden kann, um die Umwandlung der in einem Dateiformat vorliegenden Anzeigeelemente in Bild- und/oder Tonsignale für die Anzeigeeinrichtungen durchzuführen. Die Festlegung des Zeitpunktes, zu dem eine Anzeige-Rechnereinrichtung ein Signal an eine bestimmte Anzeigeeinrichtung zur Darstellung des digitalen Anzeigeelementes überträgt und die Festlegung der Zieladresse, durch die der Ort der Anzeige festgelegt wird, wird durch wenigstens einen Steuerbefehl bestimmt, der von der Steuer-Rechnereinrichtung generiert und an die Anzeige-Rechnereinrichtung übertragen wird.

Der Steuerbefehl gibt der Anzeige-Rechnereinrichtung Auskunft darüber, zu welchem Zeitpunkt aus dem in einem Dateiformat vorliegenden Anzeigeelement ein Bild- und/oder Tonsignal generiert bzw. an die Anzeigeeinrichtung übertragen werden muß, um das Anzeigeelement zu einem vorgesehenen Zeitpunkt an dem vorgesehenen Ort auf der gewünschten Anzeigeeinrichtung darzustellen bzw. anzuzeigen. Die Steuer-Rechnereinrichtung ist dazu mit allen Anzeige-Rechnereinrichtungen verbunden. Jede Anzeige-Rechnereinrichtung ist vorzugsweise jeweils mit einer Anzeigeeinrichtung verbunden. In diesem Fall ist es möglich, digitale Anzeigeelemente auf allen mit der Steuer-Rechnereinrichtung über die Anzeige-Rechnereinrichtungen verbundenen Anzeigeeinrichtungen koordiniert darzustellen.

Grundsätzlich ist es aber auch möglich, daß eine Anzeige-Rechnereinrichtung mit einer Mehrzahl von Anzeigeeinrichtungen verbunden ist, wobei auf allen mit der Anzeige-Rechnereinrichtung verbundenen Anzeigeeinrichtungen dieselben digitalen Informationen bzw. Anzeigeelemente zum selben Zeitpunkt dargestellt werden können. Dazu kann beispielsweise eine aus dem Stand der Technik an sich bekannte Y-Weiche der eingangs beschriebenen Art vorgesehen werden, um das von der Anzeige-Rechnereinrichtung erzeugte Bild- und/oder Tonsignale zu vervielfältigen und an die mit der Anzeige-Rechnereinrichtung verbundenen Anzeigeeinrichtungen weiterzuleiten. Darüber hinaus können sogenannte Split-Rechner der Anzeige-Rechnereinrichtung nachgeschaltet werden, mit denen es möglich ist, Eingangssignale im Graphikkarten-Format mit begrenzter Auflösung auf unterschiedliche Anzeigeeinrichtungen koordiniert zu verteilen.

Bei einem Anzeigeelement kann es sich grundsätzlich um alles handeln, was der Betrachter bei der Anzeige auf der Anzeigeeinrichtung als Einheit empfindet, z.B. einen aus mehreren Sequenzen bestehenden Werbespot, aber auch Dateien, die zu einer Einheit verbunden sind, z.B. Bilder oder MPEGs eines Spots. Ein digitales Anzeigeelement kann grundsätzlich sowohl graphische als auch akustische Elemente enthalten, im einfachsten Fall kann es sich bei einem Anzeigeelement auch um eine einzelne graphische und/oder akustische Information handeln.

Die Anzeigeelemente und/oder Verweise darauf werden vorzugsweise zusammen mit dem Steuerbefehl von der Steuer-Rechnereinrichtung an die Anzeige-Rechnereinrichtung übertragen. Die Anzeige-Rechnereinrichtung dient lediglich zur Generierung von Bild- und/oder Tonsignalen aus den in einer oder mehreren Dateien vorliegenden Anzeigeelementen. Die gleichzeitige Übertragung der Steuerbefehle zusammen mit den zugeordneten digitalen Anzeigeelementen hat den Vorteil, daß mit Empfang des Steuerbefehls die Anzeige-Rechnereinrichtung unmittelbar die Generierung der Signale für die Anzeigeeinrichtung vornehmen kann, ohne daß die Anzeigeelemente auf der Anzeige-Rechnereinrichtung abgelegt bzw. gespeichert werden müßten.

Ebenso ist es auch möglich, daß die Anzeigeelemente als Datei in einem Speicher einer Speichereinrichtung der Anzeige-Rechnereinrichtung hinterlegt bzw. gespeichert sind. Die Übertragung des Steuerbefehls ist dann unabhängig von der Übertragung der Anzeigeelemente-Dateien. Sobald der Steuerbefehl an die Anzeige-Rechnereinrichtung übertragen worden ist, können die dem Steuerbefehl zugeordneten Anzeigeelemente-Dateien aus dem Speicher der Anzeige-Rechnereinrichtung geladen werden. Dies ist insbesondere dann von Vorteil, wenn auf der Anzeige-Rechnereinrichtung mehrfach dieselben Anzeigeelemente in Signale für die Anzeigeeinrichtung umgewandelt werden sollen oder eine schnelle Datenübertragung erwünscht ist.

Schließlich ist es auch möglich, daß zusammen mit dem Steuerbefehl ein digitaler Verweis oder eine Pfadangabe von der Steuer-Rechnereinrichtung an die Anzeige-Rechnereinrichtung übertragen wird, wobei der Verweis der Anzeige-Rechnereinrichtung einen Zugriff auf eine das Anzeigeelement enthaltende Datei ermöglicht. Die darzustellenden Anzeigeelemente können in diesem Fall beispielsweise in einem Speicher der Steuer-Rechnereinrichtung und/oder in einem externen Zentralspeicher hinterlegt sein. Dies ist insbesondere bei großen Datenmengen, die dargestellt werden sollen, von Vorteil.

Der von der Steuer-Rechnereinrichtung generierte Steuerbefehl kann als Einzelsteuerbefehl oder zusammen mit einer Mehrzahl weiterer Steuerbefehle in einem Steuerbefehlsblock an die Anzeige-Rechnereinrichtung übertragen werden. Die Übertragung als Steuerbefehlsblock bietet sich beispielsweise dann an, wenn Paralleleffekte oder ein "Blinklicht"-Effekt im Zusammenhang mit der Anzeige der Anzeigeelemente gewünscht ist. Die Steuerbefehle und/oder die Anzeigeelemente und/oder die Verweise können sowohl zur Steuer-Rechnereinrichtung als auch zur Anzeige-Rechnereinrichtung in einem Dateiformat oder als Netzwerkpakete übertragen werden. Im übrigen darf darauf hingewiesen werden, daß eine Mehrzahl von Anzeigeeinrichtungen für einen Betrachter in einem räumlichen Verbund erkennbar angeordnet werden können. Hier kommt die Erfindung in besonderer Weise zum tragen.

Eine besonders bevorzugte Ausführungsform sieht vor, daß eine Mehrzahl von Anzeigeelementen und/oder Verweisen und Steuerinformationen in einer Ausstrahlungsliste zusammengefaßt werden und daß die Ausstrahlungsliste oder einzelne Anzeigeelemente und/oder Verweise und Steuerinformationen an die Steuer-Rechnereinrichtung übertragen werden. In der Ausstrahlungsliste können die über einen vorgegebenen Zeitraum darzustellenden Anzeigeelemente in der Art eines Ablaufplans dargestellt sein. Die Ausstrahlungsliste wird nach der Übertragung an die Steuer-Rechnereinrichtung von dieser ausgewertet werden, wobei entsprechend der zeitlichen und/oder örtlichen Zuordnung der darzustellenden Anzeigeelemente in der Ausstrahlungsliste Steuerbefehle für die Anzeige der in der Ausstrahlungsliste zusammengefaßten Anzeigeelemente und/oder Verweise generiert und an die Anzeige-Rechnereinrichtungen übertragen werden. Die Ausstrahlungsliste liegt vorzugsweise ebenfalls in einem Dateiformat vor, wobei es in einfacher Weise möglich ist, für unterschiedliche Anzeigeeinrichtungen und unterschiedliche Anzeigezeitpunkte unterschiedliche Ausstrahlungslisten aus einer übergeordneten Ausstrahlungsliste, einer sogenannten Master-Playlist, zu generieren.

Vorzugsweise sind die Anzeige-Rechnereinrichtungen und die Steuer-Rechnereinrichtungen in ein Netzwerk, beispielsweise in ein Intranet, eingebunden. Die Informationsübertragung zwischen der Steuer-Rechnereinrichtung und der Anzeige-Rechnereinrichtung erfolgt dabei vorzugsweise über eine permanente bzw. stete Informationsübertragungsleitung.

Um auf wenigstens zwei Anzeigeeinrichtungen dieselben digitalen Anzeigeelemente und/oder Programmblöcke darzustellen, ist es erfindungsgemäß möglich, daß auf wenigstens zwei Anzeige-Rechnereinrichtungen dieselben Anzeigeelemente hinterlegt sind oder daß an wenigstens zwei Anzeige-Rechnereinrichtungen dieselben Anzeigeelemente übertragen werden. Um gleiche Informationen zu gleicher Zeit auf den Anzeigeeinrichtungen darzustellen, können den entsprechenden Anzeige-Rechnereinrichtungen auch dieselben Steuerbefehle von der Steuer-Rechnereinrichtung übertragen werden.

Die zeitliche und/oder räumliche Koordination der darzustellenden Informationen bzw. der Anzeigeelemente kann unterschiedlich erfolgen. Vorzugsweise wird der Steuerbefehl zeitnah, d.h. unmittelbar vor der gewünschten Anzeige des Anzeigeelementes übertragen. Im einfachsten Fall besteht der Steuerbefehl in einer Anweisung an die Anzeige-Rechnereinrichtung im Sinne von "Zeige jetzt das Anzeigeelement x". Damit durch das Laden von Anzeigeelementen in dem Arbeitsspeicher der Anzeige-Rechnereinrichtung keine zeitliche Verzögerung eintritt, kann die Steuer-Rechnereinrichtung die Übertragung der Anzeigeelemente und somit deren Verfügbarkeit im Arbeitsspeicher der Anzeige-Rechnereinrichtung schon vor dem geforderten Anzeigezeitpunkt mit einem sogenannten Loadbefehl veranlassen. In diesem Fall wird zunächst für jedes Anzeigeelement mit einem gewissen zeitlichen Vorlauf der Steuerbefehl "Lade Anzeigeelement x" und dann zum Ausstrahlungszeitpunkt rechtzeitig der weitere Steuerbefehl "Zeige jetzt das Anzeigeelement x" gesendet. Es ist auch möglich, den Steuerbefehl so zu gestalten, daß ein Loadbefehl und zugleich ein Anzeigebefehl übertragen wird, wobei beim Absenden eine den Zeitunterschied bis zur Anzeige festlegende Information mitübertragen wird. Der Steuerbefehl enthält in diesem Fall beispielsweise die Aussage "Lade jetzt das digitale Anzeigeelement x und zeige nach Ablauf einer Zeitspanne y das Anzeigeelement x an".

Weiterhin ist es möglich, daß die Anzeige-Rechnereinrichtungen auf einen Referenzzeitpunkt synchronisiert werden und daß ein Steuerbefehl zu einem vorgegebenen Zeitpunkt bezogen auf den Referenzzeitpunkt die Generierung eines Bild- und/oder Tonsignals aus einer Anzeigeelement-Datei bewirkt. Der Steuerbefehl, der die Übertragung des Signals und/oder die Darstellung des Anzeigeelementes auf der Anzeigeeinrichtung bewirkt, wird unabhängig von der möglichen Kombination mit dem Steuerbefehl, der das Laden des Anzeigeelements bewirkt, mit einer absoluten Zeitmarke versehen oder auf den Referenzzeitpunkt bezogen. Um die koordinierte Darstellung der Anzeigeelemente auf den verschiedenen Anzeigeeinrichtungen zu ermöglichen, ist es bei der Verwendung einer absoluten Zeitmarke erforderlich, die am System beteiligten Rechner-Einrichtungen auf die gewählte Zeitmarke bzw. den Referenzzeitpunkt zu synchronisieren.

Um die zeitliche Koordination der auf den Anzeigeeinrichtungen darzustellenden Anzeigeelemente mit einer höheren Genauigkeit durchführen zu können, ist es erfindungsgemäß möglich, daß die Zeitspanne zwischen dem Übertragungsbeginn eines Steuerbefehls und/oder Abschluß des Ladevorgangs des Anzeigeelements und/oder der Übertragung eines Bild- und/oder Tonsignals und/oder der Darstellung des Anzeigeelementes auf der Anzeigeeinrichtung automatisch ermittelt wird und bei weiteren Übertragungen automatisch in Art einer Regelung berücksichtigt wird. In diesem Zusammenhang ist es von Vorteil, daß bei der Umwandlung der darzustellenden Anzeigeelemente in Signale und/oder bei der Darstellung der Anzeigeelemente auf der jeweiligen Anzeigeeinrichtung ein Kontrollsignal an die Steuer-Rechnereinrichtung übertragen werden kann. In Abhängigkeit von der ermittelten Zeitspanne und/oder von dem übertragenen Kontrollsignal kann der Zeitpunkt der Darstellung der Anzeigeelemente bei folgenden Übertragungen auf der betreffenden Anzeigeeinrichtung geregelt werden.

Vorzugsweise werden die Anzeigeeinrichtungen in einem räumlichen Verbund erkennbar angeordnet, wobei die koordinierte Darstellung der digitalen Informationen für einen Betrachter unmittelbar erkennbar ist. Beispielsweise können eine Mehrzahl von Anzeigeeinrichtungen in einer Reihe angeordnet werden, wobei auf einzelnen Anzeigeeinrichtungen bestimmte Bildelemente angezeigt werden. Damit ist es möglich, Anzeigemuster auf den in einem räumlichen Verbund angeordneten Anzeigeeinrichtungen darzustellen. Beispielsweise können zu einem Zeitpunkt t₁ die erste, die dritte und die fünfte Anzeigeeinrichtung ein rotes Bild anzeigen, während auf der zweiten, der vierten und der sechsten Anzeigeeinrichtung ein grünes Bild dargestellt wird. Zum Zeitpunkt t₂ soll das Farbmuster bei diesen sechs, in einem räumlichen Verbund angeordneten Anzeigeeinrichtungen umgekehrt sein. Ein anderes einfaches Beispiel sieht vor, daß ein graphisches Anzeigeelement, wie beispielsweise ein rotes Bild, innerhalb kurzer Zeit von der ersten bis zur letzten Anzeigeinrichtung durchläuft. Die Komplexität der koordinierten Abläufe darzustellender Anzeigeelemente und/oder einer Ausstrahlungsliste kann beliebig sein.

Grundsätzlich ist es jedoch auch möglich, daß eine Mehrzahl von Anzeigeeinrichtungen in mehreren Räumen voneinander getrennt bzw. an unterschiedlichen Standorten angeordnet werden. Beispielsweise kann ein Betrachter in einem ersten Raum eine erste Sequenz eines Films zum Zeitpunkt t₁ betrachten und in einem benachbarten zweiten Raum eine zweite Sequenz des Films zum Zeitpunkt t₂. Vorzugsweise kann in diesem Fall der Zeitunterschied zwischen dem Ausstrahlungszeitpunkt der ersten Sequenz und dem der zweiten Sequenz genau der durchschnittlichen Zeitspanne entsprechen, die der Betrachter benötigt, um von dem ersten Raum zu dem zweiten Raum zu gelangen. Dem Betrachter wird also trotz des Raumwechsels ein scheinbar kontinuierlicher Ablauf des Films dargestellt.

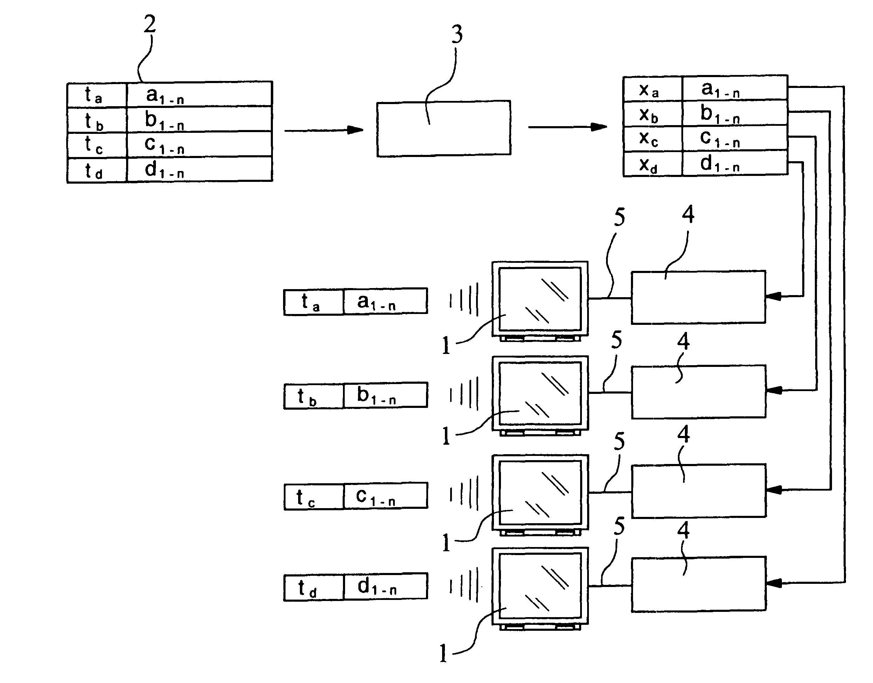

Eine mögliche Ausführungsform des erfindungsgemäßen Verfahrens wird nachfolgend exemplarisch anhand der Zeichnung beschrieben.

In der Zeichnung ist eine vereinfachte Darstellung einer Ausführungsform des erfindungsgemäßen Verfahrens zur Darstellung digitaler Anzeigeelemente a₁₋ₙ, b₁₋ₙ, c₁₋ₙ, d₁₋ₙ auf einer Mehrzahl von Anzeigeeinrichtungen 1 dargestellt. Bei den Anzeigeelementen a₁₋ₙ, b₁₋ₙ, c₁₋ₙ, d₁₋ₙ kann es sich beispielsweise um einzelne Texte, Videos oder Bilder oder auch Kombinationen daraus und Sequenzen davon handeln, die für die spätere Ausstrahlung in der Art eines Programms in einer Ausstrahlungsliste 2 zusammengefaßt sind. Die Ausstrahlungsliste 2 ist dabei eine Datei, in der die Anzeigeelemente a₁₋ₙ, b₁₋ₙ, c₁₋ₙ, d₁₋ₙ in einem Dateiformat oder Verweise darauf enthalten sind. Die Ausstrahlungsliste 2 ist in der Art eines Ablaufplans erstellt, wobei jedem Anzeigeelement a₁₋ₙ bis d₁₋ₙ eine Steuerinformation tₐ, t_{b}, t_{c}, t_{d} zugeordnet ist. Die Steuerinformation tₐ bis t_{d} legt fest, zu welchem Zeitpunkt und auf welcher Anzeigeeinrichtung 1 ein Anzeigeelement a₁₋ₙ bis d₁₋ₙ angezeigt werden soll. Weiterhin kann sie die Position am Bildschirm und den Einblendeffekt für die Anzeigeelemente enthalten.

Gemäß der in der Zeichnung dargestellten Ausführungsform ist vorgesehen, daß die Ausstrahlungsliste 2 an eine Steuer-Rechnereinrichtung 3 übertragen wird. Die Steuer-Rechnereinrichtung 3 wertet die Ausstrahlungsliste 2 aus, wobei die Steuer-Rechnereinrichtung 3 aus jeder Steuerinformation tₐ bis t_{d} einen entsprechenden Steuerbefehl xₐ bis x_{d} generiert, der wie die jeweilige Steuerinformation festlegt, zu welchem Zeitpunkt und auf welche Anzeigeeinrichtung die einzelnen Anzeigeelemente angezeigt werden sollen. Weiterhin kann über den jeweiligen Steuerbefehl die Position am Bildschirm und der Einblendeffet für die einzelnen Anzeigeelemente gesteuert werden. Die Steuer-Rechnereinrichtung 3 überträgt die Anzeigeelemente a₁₋ₙ, b₁₋ₙ, c₁₋ₙ, d₁₋ₙ zusammen mit den generierten Steuerbefehlen xₐ bis x_{d} an eine Mehrzahl von Anzeige-Rechnereinrichtungen 4. Aufgrund der Steuerbefehle xₐ bis x_{d} werden von der betreffenden Anzeige-Rechnereinrichtung 4 jeweils aus der das Anzeigeelement a₁₋ₙ, b₁₋ₙ, c₁₋ₙ, d₁₋ₙ enthaltenden Datei Bild- und/oder Tonsignale 5 generiert zur Anzeige bzw. Ausgabe der Anzeigeelemente a₁₋ₙ, b₁₋ₙ, c₁₋ₙ, d₁₋ₙ, welche anschließend an die jeweils zugeordnete Anzeigeeinrichtung 1 übertragen werden. Dadurch wird sichergestellt, daß die in der Ausstrahlungsliste vorgesehene zeitliche Koordination der Anzeigeelemente a₁₋ₙ, b₁₋ₙ, c₁₋ₙ, d₁₋ₙ bei der Ausstrahlung der Anzeigeelemente a₁₋ₙ, b₁₋ₙ, c₁₋ₙ, d₁₋ₙ entsprechend berücksichtigt wird. Das bedeutet, daß die in der Ausstrahlungsliste 2 enthaltenden Anzeigeelemente a₁₋ₙ, b₁₋ₙ, c₁₋ₙ, d₁₋ₙ gemäß dem vorgesehenen Ablaufplan zu einer vorgesehenen Zeit angezeigt bzw. ausgegeben werden. Dadurch ist die zeitliche und/oder räumliche Koordination der Anzeigeelemente a₁₋ₙ, b₁₋ₙ, c₁₋ₙ, d₁₋ₙ in einfacher Weise möglich und durchführbar.

Die Steuer-Rechnereinrichtung 3 kann einen oder mehrere Anzeige-Rechnereinrichtungen 4 ansteuern. Nicht dargestellt, aber grundsätzlich möglich ist es im übrigen auch, daß bei einer Mehrzahl von Anzeige-Rechnereinrichtungen eine die Funktion der Steuer-Rechnereinrichtung für alle anderen Anzeige-Rechnereinrichtungen übernimmt. Die Steuer-Rechnereinrichtung 3 und die entsprechenden Anzeige-Rechnereinrichtungen 4 weisen hierzu entsprechende Datenverarbeitungsprogramme auf, nämlich die Steuer-Rechnereinrichtung 3 als Software einen sogenannten Playlist-Analyzer und die Anzeige-Rechnereinrichtungen 4 jeweils einen sogenannten Element-Player.

Der Playlist-Analyzer kann also einen oder mehrere Element-Player ansteuern. Dabei können im Prinzip der Playlist-Analyzer und die Element-Player auf demselben Computer bzw. derselben Rechnereinrichtung als unabhängige Programme installiert sein. Bevorzugt wird aber der Playlist-Analyzer auf einem eigenen Computer installiert. Ebenso werden bevorzugt die Element-Player auf jeweils einem eigenen Computer installiert. Dadurch wird erreicht, daß der Computer mit dem Playlist-Analyzer und jeder Computer mit einem Element-Player die technisch maximal verfügbare Kapazität für die jeweilige Aufgabe einsetzen und im Bedarfsfall (z.B. bei Reparaturen) leicht ausgetauscht werden kann.

## Patentansprüche

1. Verfahren zur Darstellung von digitalen Anzeigeelementen (a₁₋ₙ, b₁₋ₙ, c₁₋ₙ, d₁₋ₙ) auf einer Mehrzahl von Anzeigeeinrichtungen (1),
wobei die Darstellung von Anzeigeelementen (a₁₋ₙ, b₁₋ₙ, c₁₋ₙ, d₁₋ₙ) auf einer ersten Anzeigeeinrichtung (1) und die Darstellung von Anzeigeelementen (a₁₋ₙ, b₁₋ₙ, c₁₋ₙ, d₁₋ₙ) auf wenigstens einer weiteren Anzeigeeinrichtung (1) zeitlich und/oder räumlich koordiniert erfolgt,
wobei die Koordination der Anzeigeelemente (a₁₋ₙ, b₁₋ₙ, c₁₋ₙ, d₁₋ₙ) die zeitlich und/oder räumlich aufeinander abgestimmte Darstellung der auf einer Mehrzahl von Anzeigeeinrichtungen dargestellten Anzeigeelemente (a₁₋ₙ, b₁₋ₙ, c₁₋ₙ, d₁₋ₙ) betrifft und wobei die Anzeigeelemente (a₁₋ₙ, b₁₋ₙ, c₁₋ₙ, d₁₋ₙ) miteinander in Beziehung stehen,
- wobei wenigstens eine, vorzugsweise eine Mehrzahl von Anzeige-Rechnereinrichtungen (4) und eine mit den Anzeige-Rechnereinrichtungen (4) verbundene Steuer-Rechnereinrichtung (3) vorgesehen sind, und jeder Anzeige- Rechnereinrichtung (4) wenigstens eine Anzeigeeinrichtung (1) zugeordnet ist,
- wobei wenigstens ein Anzeigeelement (a₁₋ₙ, b₁₋ₙ, c₁₋ₙ, d₁₋ₙ) in einem Dateiformat und/oder wenigstens ein Verweis auf eine das Anzeigeelement (a₁₋ₙ, b₁₋ₙ, c₁₋ₙ, d₁₋ₙ) enthaltende Datei und wenigstens eine Steuerinformation (tₐ, t_{d}, t_{c}, t_{d}) an die Steuer-Rechnereinrichtung (3) übertragen wird,
- wobei die Steuerinformation (tₐ, t_{b}, t_{c}, t_{d}) den Zeitpunkt der Anzeige des Anzeigeelementes (a₁₋ₙ, b₁₋ₙ, c₁₋ₙ, d₁₋ₙ) auf einer Anzeigeeinrichtung (1) festlegt,
- wobei die Steuer-Rechnereinrichtung (3) aus der Steuerinformation (tₐ, t_{b}, t_{c}, t_{d}) wenigstens einen Steuerbefehl (xₐ, x_{b}, x_{c}, x_{d}) generiert,
- wobei das Anzeigeelement (a₁₋ₙ, b₁₋ₙ, c₁₋ₙ, d₁₋ₙ) und/oder der Verweis und der Steuerbefehl (xₐ, x_{b}, x_{c}, x_{d}) von der Steuer-Rechnereinrichtung (3) an die Anzeige-Rechnereinrichtung (4) übertragen werden,
- wobei aufgrund des Steuerbefehls (xₐ, x_{b}, x_{c}, x_{d}) von der Anzeige-Rechnereinrichtung (4) die in digitaler Form vorliegenden Anzeigeelemente (a₁₋ₙ, b₁₋ₙ, c₁₋ₙ, d₁₋ₙ) in Signale (5) in einem Graphikkarten- und/oder Akustikkarten-Format zur Anzeige bzw. Ausgabe des Anzeigeelementes (a₁₋ₙ, b₁₋ₙ, c₁₋ₙ, d₁₋ₙ) auf einer der Anzeigevorrichtungen (1) umgewandelt werden und
- wobei der Steuerbefehl (xₐ, x_{b}, x_{c}, x_{d}) die Anzeigeeinrichtung (1) festlegt, an die das umgewandelte Signal (5) übertragen wird
**dadurch gekennzeichnet**
- **daß** der Steuerbefehl (xₐ, x_{b}, x_{c}, x_{d}) den Zeitpunkt festlegt, zu dem die Anzeige-Rechnereinrichtung (4) das *zuvor umgewandelte* Signal (5) in einem Graphikkarten- und/oder Akustikkartenformat an die *zugeordnete* Anzeigeeinrichtung (1) überträgt.

2. Verfahren nach Anspruch 1, **dadurch gekennzeichnet, daß** eine Mehrzahl von Anzeigeelementen (a₁₋ₙ, b₁₋ₙ, c₁₋ₙ, d₁₋ₙ) und/oder Verweisen und Steuerinformationen (tₐ, t_{b}, t_{c}, t_{d}) in einer Ausstrahlungsliste (2) zusammengefaßt werden und daß die Ausstrahlungsliste (2) oder einzelne Anzeigeelemente (a₁₋ₙ, b₁₋ₙ, c₁₋ₙ, d₁₋ₙ) und/oder Verweise und Steuerinformationen (tₐ, t_{b}, t_{c}, t_{d}) an die Steuer-Rechnereinrichtung (3) übertragen werden.

3. Verfahren nach Anspruch 1 oder 2, **dadurch gekennzeichnet, daß** von der Steuer-Rechnereinrichtung (3) die Ausstrahlungsliste (2) ausgewertet wird, wobei Steuerbefehle (xₐ, x_{b}, x_{c}, x_{d}) für die Anzeige der in der Ausstrahlungsliste (2) zusammengefaßten Anzeigeelemente (a₁₋ₙ, b₁₋ₙ, c₁₋ₙ, d₁₋ₙ) und/oder Verweise darauf generiert werden.

4. Verfahren nach einem der vorhergehenden Ansprüche, **dadurch gekennzeichnet, daß** die Anzeige-Rechnereinrichtung (4) und die Steuer-Rechnereinrichtung (3) in ein Netzwerk, vorzugsweise in ein Intranet eingebunden sind.

5. Verfahren nach einem der vorhergehenden Ansprüche, **dadurch gekennzeichnet, daß** auf wenigstens zwei Anzeige-Rechnereinrichtungen (4) dieselben Anzeigeelemente (a₁₋ₙ, b₁₋ₙ, c₁₋ₙ, d₁₋ₙ) hinterlegt sind oder daß an wenigstens zwei Anzeige-Rechnereinrichtungen (4) dieselben Anzeigeelemente (a₁₋ₙ, b₁₋ₙ, c₁₋ₙ, d₁₋ₙ) übertragen werden.

6. Verfahren nach einem der vorhergehenden Ansprüche, **dadurch gekennzeichnet, daß** der Steuerbefehl (xₐ, x_{b}, x_{c}, x_{d}) zeitnah zur gewünschten Anzeige des Anzeigeelementes (a₁₋ₙ, b₁₋ₙ, c₁₋ₙ, d₁₋ₙ) an die Anzeige-Rechnereinrichtung (4) übertragen wird.

7. Verfahren nach einem der vorhergehenden Ansprüche, **dadurch gekennzeichnet, daß** ein erster Steuerbefehl das Laden einer ein Anzeigeelement (a₁₋ₙ, b₁₋ₙ, c₁₋ₙ, d₁₋ₙ) enthaltenden Datei auf der Anzeige-Rechnereinrichtung (4) bewirkt und/oder daß ein weiterer Steuerbefehl die Übertragung des Signals (5) von der Anzeige-Rechnereinrichtung (4) an die Anzeigeeinrichtung (1) und/oder die Anzeige des Anzeigeelementes (a₁₋ₙ, b₁₋ₙ, c₁₋ₙ, d₁₋ₙ) auf der Anzeigeeinrichtung (1) bewirkt.

8. Verfahren nach einem der vorhergehenden Ansprüche, **dadurch gekennzeichnet, daß** der erste Steuerbefehl und der weitere Steuerbefehl um eine Zeitspanne versetzt übertragen werden oder daß der erste Steuerbefehl und der weitere Steuerbefehl gleichzeitig übertragen werden, wobei der weitere Steuerbefehl die Übertragung des Signals (5) und/oder die Anzeige des Anzeigeelementes (a₁₋ₙ, b₁₋ₙ, c₁₋ₙ, d₁₋ₙ) auf der Anzeigeeinrichtung (1) nach Ablauf einer vorgegebenen Zeitspanne von der Übertragung des weiteren Steuerbefehls an bewirkt.

9. Verfahren nach einem der vorhergehenden Ansprüche, **dadurch gekennzeichnet, daß** mehrere Anzeige-Rechnereinrichtungen (4) auf einen Referenzzeitpunkt synchronisiert werden und daß der weitere Steuerbefehl zu einem vorgegebenen Zeitpunkt die Übertragung des Signals (5) bewirkt.

10. Verfahren nach einem der vorhergehenden Ansprüche, **dadurch gekennzeichnet, daß** die Zeitspanne zwischen dem Übertragungsbeginn des Steuerbefehls und/oder Abschluß des Ladevorgangs des Anzeigeelements und/oder der Übertragung des Signals (5) und/oder der Anzeige des Anzeigeelementes (a₁₋ₙ, b₁₋ₙ, c₁₋ₙ, d₁₋ₙ) auf der Anzeigeeinrichtung (1) automatisch ermittelt wird.

11. Verfahren nach einem der vorhergehenden Ansprüche, **dadurch gekennzeichnet, daß** bei der Generierung eines Signals (5) und/oder bei der Anzeige des Anzeigeelementes (a₁₋ₙ, b₁₋ₙ, c₁₋ₙ, d₁₋ₙ) auf der jeweiligen Anzeigeeinrichtung (1) ein Kontrollsignal an die Steuer-Rechnereinrichtung (3) übertragen wird.

12. Verfahren nach einem der vorhergehenden Ansprüche, **dadurch gekennzeichnet, daß** von der Steuer-Rechnereinrichtung (3) in Abhängigkeit von der ermittelten Zeitspanne und/oder von dem Kontrollsignal der Zeitpunkt der Anzeige des Anzeigeelementes (a₁₋ₙ, b₁₋ₙ, c₁₋ₙ, d₁₋ₙ) auf der betreffenden Anzeigeeinrichtung (1) gesteuert wird.

## Claims

1. Method for visualization of digital display elements (a₁₋ₙ, b₁₋ₙ, c₁₋ₙ, d₁₋ₙ) on a plurality of display devices (1),
wherein the visualization of display elements (a₁₋ₙ, b₁₋ₙ, c₁₋ₙ, d₁₋ₙ) on a first display device (1) and the visualization of display elements (a₁₋ₙ, b₁₋ₙ, c₁₋ₙ, d₁₋ₙ) on at least one additional display device (1) takes place in a chronologically and/or spatially coordinated manner,
wherein the coordination of the display elements (a₁₋ₙ, b₁₋ₙ, c₁₋ₙ, d₁₋ₙ) concerns the chronologically and/or spatially coordinated visualization of the display elements (a₁₋ₙ, b₁₋ₙ, c₁₋ₙ, d₁₋ₙ), which are displayed on a plurality of display devices and
wherein the display elements (a₁₋ₙ, b₁₋ₙ, c₁₋ₙ, d₁₋ₙ) are connected to one another,
- wherein at least one, preferably a plurality of computer display devices (4), and a control computer device (3) connected to said computer display devices (4) are provided, and each computer display device (4) is associated with at least one display device (1),
- wherein at least one display element (a₁₋ₙ, b₁₋ₙ, c₁₋ₙ, d₁₋ₙ) in a file format and/or a at least one reference to a file containing the display element (a₁₋ₙ, b₁₋ₙ, c₁₋ₙ, d₁₋ₙ) and at least one control information (tₐ, t_{b}, t_{c}, t_{d}) is transmitted to the control computer device (3),
- wherein the control information (tₐ, t_{b}, t_{c}, t_{d}) specifies the point in time of the display of the display element (a₁₋ₙ, b₁₋ₙ, c₁₋ₙ, d₁₋ₙ) on a display device (1),
- wherein the control computer device (3) generates at least one control command (Xₐ, X_{b}, X_{c}, x_{d}) from the control information (tₐ, t_{b}, t_{c}, t_{d}),
- wherein the display element (a₁₋ₙ, b₁₋ₙ, c₁₋ₙ, d₁₋ₙ) and/or the reference and the control command (xₐ, x_{b}, x_{c}, x_{d}) is transmitted by the control computer device (3) to the computer display device (4),
- wherein as a result of the control command (xₐ, x_{b}, x_{c}, x_{d}) of the display computer device (4) the display elements (a₁₋ₙ, b₁₋ₙ, c₁₋ₙ, d₁₋ₙ), which are available in digital form, are transformed into signals (5) in a graphic card and/or acoustic card format, in order to, respectively, display or output the display element (a₁₋ₙ, b₁₋ₙ, c₁₋ₙ, d₁₋ₙ) on or to one of the display elements (1) and
- wherein the control command (xₐ, x_{b}, x_{c}, x_{d}) is specifies the display device (1), to which the afore transformed signal is transmitted,
**characterized in**
- **that** the control command (xₐ, x_{b}, x_{c}, x_{d}) specifies the point in time, at which the display computer device (4) transmits the afore transformed signal (5) in a graphic card and/or acoustic card format to the associated display device (1).

2. Method according to claim 1, **characterized in that** a plurality of display elements (a₁₋ₙ, b₁₋ₙ, c₁₋ₙ, d₁₋ₙ) and/or references and control information (tₐ, t_{b}, t_{c}, t_{d}) are compiled in a play list (2) and that the play list (2) or separate display elements (a₁₋ₙ, b₁₋ₙ, c₁₋ₙ, d₁₋ₙ) and/or references and control information (tₐ, t_{b}, t_{c}, t_{d}) are transmitted to the control computer device (3).

3. Method according to claim 1 or 2, **characterized in that** the play list (2) is analyzed by the control computer device (3), whereby control commands (xₐ, x_{b}, x_{c}, x_{d}) are generated for the display of the display elements (a₁₋ₙ, b₁₋ₙ, c₁₋ₙ, d₁₋ₙ) compiled in the play list (2) and/or references thereto.

4. Method according to one of the preceding claims, **characterized in that** the computer display device (4) and the control computer device (3) are integrated into a network, preferably into an intranet.

5. Method accoring to one of the preceding claims, **characterized in that** the same display elements (a₁₋ₙ, b₁₋ₙ, c₁₋ₙ, d₁₋ₙ) are stored on at least two computer display devices (4) or that the same display elements (a₁₋ₙ, b₁₋ₙ, c₁₋ₙ, d₁₋ₙ) are transmitted to at least two computer display devices (4).

6. Method according to one of the preceding claims, **characterized in that** the control command (xₐ, x_{b}, x_{c}, x_{d}) is transmitted close to the time of the desired display of the display element (a₁₋ₙ, b₁₋ₙ, c₁₋ₙ, d₁₋ₙ) to the computer display device (4).

7. Method according to one of the preceding claims, **characterized in that** a first control command causes a file containing a display element (a₁₋ₙ, b₁₋ₙ, c₁₋ₙ, d₁₋ₙ) to be loaded on the computer display device (4) and/or that a further control command causes the signal (5) to be transmitted by the computer display device (4) to the display device (1) and/or causes the display element (a₁₋ₙ, b₁₋ₙ, c₁₋ₙ, d₁₋ₙ) to be displayed on the display device (1).

8. Method according to one of the preceding claims, **characterized in that** the first control command and the further control command are transmitted so as to be staggered by a period of time or that the first control command and the further control command are transmitted simultaneously, whereby further control command causing the signal (5) to be transmitted and/or the display element (a₁₋ₙ, b₁₋ₙ, c₁₋ₙ, d₁₋ₙ) to be displayed on the display device (1) after a predetermined period of time has elapsed after the transmission of the further control command.

9. Method according to one of the preceding claims, **characterized in that** a plurality of computer display devices (4) are synchronized to a reference time and that the further control command causes the transmission of the signal (5) at a predetermined time.

10. Method according to one of the preceding claims, **characterized in that** the period of time between the beginning of the transmission of the control command and/or the end of the procedure of loading the display element and/or the transmission of the signal (5) and/or the display of the display element (a₁₋ₙ, b₁₋ₙ, c₁₋ₙ, d₁₋ₙ) on the display device (1) is automatically determined.

11. Method according to one of the preceding claims, **characterized in that** during the generation of a signal (5) and/or during the display of the display element (a₁₋ₙ, b₁₋ₙ, c₁₋ₙ, d₁₋ₙ) on the relevant display device (1), a control signal is transmitted to the control computer device (3).

12. Method according to one of the preceding claims, **characterized in that** the point in time at which the display element (a₁₋ₙ, b₁₋ₙ, c₁₋ₙ, d₁₋ₙ) is displayed on the relevant display device (1) is controlled by the control computer device (3) as a function of the period of time determined and/or as a function of the control signal.

## Revendications

1. Procédé pour la représentation d'éléments d'affichage numériques (a₁₋ₙ, b₁₋ₙ, c₁₋ₙ, d₁₋ₙ) sur une multitude de dispositifs d'affichage (1),
dans lequel la représentation d'éléments d'affichage (a₁₋ₙ, b₁₋ₙ, c₁₋ₙ, d₁₋ₙ) sur un premier dispositif d'affichage (1) et la représentation d'éléments d'affichage (a₁₋ₙ, b₁₋ₙ, c₁₋ₙ, d₁₋ₙ) sur au moins un autre dispositif d'affichage (1) ont lieu de manière coordonnée dans le temps et/ou dans l'espace ;
dans lequel la coordination des éléments d'affichage (a₁₋ₙ, b₁₋ₙ, c₁₋ₙ, d₁₋ₙ) concerne la représentation en concordance réciproque dans le temps et/ou dans l'espace des éléments d'affichage (a₁₋ₙ, b₁₋ₙ, c₁₋ₙ, d₁₋ₙ) représentés sur une multitude de dispositifs d'affichage, les éléments d'affichage (a₁₋ₙ, b₁₋ₙ, c₁₋ₙ, d₁₋ₙ) étant mis en relation réciproque ;
- dans lequel on prévoit au moins un dispositif informatique d'affichage (4), de préférence une multitude des dispositifs en question, et un dispositif informatique de contrôle (3) relié aux dispositifs informatiques d'affichage (4), au moins un dispositif d'affichage (1) étant attribué à chaque dispositif informatique d'affichage (4) ;
- dans lequel au moins un élément d'affichage (a₁₋ₙ, b₁₋ₙ, c₁₋ₙ, d₁₋ₙ) dans un format de fichier et/ou au moins une référence à un fichier contenant l'élément d'affichage (a₁₋ₙ, b₁₋ₙ, c₁₋ₙ, d₁₋ₙ) et au moins une information de contrôle (tₐ, t_{b}, t_{c}, t_{d}) sont transmis au dispositif informatique de contrôle (3) ;
- dans lequel l'information de contrôle (tₐ, t_{b}, t_{c}, t_{d}) détermine le moment d'affichage de l'élément d'affichage (a₁₋ₙ, b₁₋ₙ, c₁₋ₙ, d₁₋ₙ) sur un dispositif d'affichage (1) ;
- dans lequel le dispositif informatique de contrôle (3) génère, à partir des informations de contrôle (tₐ, t_{b}, t_{c}, t_{d}), au moins une instruction de contrôle (Xₐ, X_{b}, X_{c}, X_{d}) ;
- dans lequel l'élément d'affichage (a₁₋ₙ, b₁₋ₙ, c₁₋ₙ, d₁₋ₙ) et/ou la référence et l'instruction de contrôle (Xₐ, X_{b}, X_{c}, X_{d}) sont transmis du dispositif informatique de contrôle (3) au dispositif informatique d'affichage (4) ;
- dans lequel, sur base de l'instruction de contrôle (Xₐ, X_{b}, X_{c}, X_{d}) émanant du dispositif informatique d'affichage (4), les éléments d'affichage (a₁₋ₙ, b₁₋ₙ, c₁₋ₙ, d₁₋ₙ) présents sous forme numérique sont transformés en signaux (5) dans un format de carte graphique et/ou de carte acoustique à des fins d'affichage, respectivement d'émission de l'élément d'affichage (a₁₋ₙ, b₁₋ₙ, c₁₋ₙ, d₁₋ₙ) sur un des dispositifs d'affichage (1) ; et
- dans lequel l'instruction de contrôle (Xₐ, X_{b}, X_{c}, X_{d}) détermine le dispositif d'affichage (1) auquel est transmis le signal transformé (5) ;
**caractérisé en ce que**
- l'instruction de contrôle (Xₐ, X_{b}, X_{c}, X_{d}) détermine le moment auquel le dispositif informatique d'affichage (4) transmet le signal *transformé au préalable* (5) dans un format de carte graphique et/ou de carte acoustique au dispositif d'affichage (1) *qui lui est attribué.*

2. Procédé selon la revendication 1, **caractérisé en ce qu'**on rassemble une multitude d'éléments d'affichage (a₁₋ₙ, b₁₋ₙ, c₁₋ₙ, d₁₋ₙ) et/ou de références et d'informations de contrôle (tₐ, t_{b}, t_{c}, t_{d}) dans une liste de diffusion (2) et **en ce que** la liste de diffusion (2) ou des éléments d'affichage individuels (a₁₋ₙ, b₁₋ₙ, c₁₋ₙ, d₁₋ₙ) et/ou des références et des informations de contrôle (tₐ, t_{b}, t_{c}, t_{d}) individuelles sont transmis au dispositif informatique de contrôle (3).

3. Procédé selon la revendication 1 ou 2, **caractérisé en ce que** la liste de diffusion (2) est évaluée par le dispositif informatique de contrôle (3), des instructions de contrôle (Xₐ, X_{b}, X_{c}, X_{d}) étant ensuite générées pour l'affichage des éléments d'affichage (a₁₋ₙ, b₁₋ₙ, c₁₋ₙ, d₁₋ₙ) et/ou des références rassemblés dans la liste de diffusion (2).

4. Procédé selon l'une quelconque des revendications précédentes, **caractérisé en ce que** le dispositif informatique d'affichage (4) et le dispositif informatique de contrôle (3) sont intégrés dans un réseau, de préférence dans un intranet.

5. Procédé selon l'une quelconque des revendications précédentes, **caractérisé en ce que**, sur au moins deux dispositifs informatiques d'affichage (4), on dépose les mêmes éléments d'affichage (a₁₋ₙ, b₁₋ₙ, c₁₋ₙ, d₁₋ₙ) ou bien **en ce qu'**on transfère les mêmes éléments d'affichage (a₁₋ₙ, b₁₋ₙ, c₁₋ₙ, d₁₋ₙ) à au moins deux dispositifs informatiques d'affichage (4).

6. Procédé selon l'une quelconque des revendications précédentes, **caractérisé en ce que** l'instruction de contrôle (Xₐ, X_{b}, X_{c}, X_{d}) est transmise rapidement pour l'affichage désiré de l'élément d'affichage (a₁₋ₙ, b₁₋ₙ, c₁₋ₙ, d₁₋ₙ) au dispositif informatique d'affichage (4).

7. Procédé selon l'une quelconque des revendications précédentes, **caractérisé en ce que**, une première instruction de contrôle, entraîne le chargement de fichiers contenant un élément d'affichage (a₁₋ₙ, b₁₋ₙ, c₁₋ₙ, d₁₋ₙ) sur le dispositif informatique d'affichage (4) et/ou **en ce qu'**une instruction de contrôle ultérieure entraîne la transmission du signal (5) du dispositif informatique d'affichage (4) au dispositif d'affichage (1) et/ou l'affichage de l'élément d'affichage (a₁₋ₙ, b₁₋ₙ, c₁₋ₙ, d₁₋ₙ) sur le dispositif d'affichage (1).

8. Procédé selon l'une quelconque des revendications précédentes, **caractérisé en ce que** la première instruction de contrôle et l'instruction de contrôle ultérieure sont transmises en décalage dans le temps ou bien **en ce que** la première instruction de contrôle et l'instruction de contrôle ultérieure sont transmises de manière simultanée, l'instruction de contrôle ultérieure entraînant la transmission du signal (5) et/ou l'affichage de l'élément d'affichage (a₁₋ₙ, b₁₋ₙ, c₁₋ₙ, d₁₋ₙ) sur le dispositif d'affichage (1) après le déroulement d'un laps de temps prédéfini à partir de la transmission de l'instruction de contrôle ultérieure.

9. Procédé selon l'une quelconque des revendications précédentes, **caractérisé en ce que** plusieurs dispositifs informatiques d'affichage (4) sont synchronisés par rapport à un moment de référence et **en ce que** l'instruction de contrôle ultérieure entraîne la transmission du signal (5) à un moment prédéfini.

10. Procédé selon l'une quelconque des revendications précédentes, **caractérisé en ce que** le laps de temps s'étendant entre le début de la transmission de l'instruction de contrôle et/ou la fin du processus de chargement de l'élément d'affichage et/ou de la transmission du signal et/ou de l'affichage de l'élément d'affichage (a₁₋ₙ, b₁₋ₙ, c₁₋ₙ, d₁₋ₙ) est déterminé de manière automatique sur le dispositif d'affichage (1).

11. Procédé selon l'une quelconque des revendications précédentes, **caractérisé en ce que**, lors de la génération d'une signal (5) et/ou lors de l'affichage de l'élément d'affichage (a₁₋ₙ, b₁₋ₙ, c₁₋ₙ, d₁₋ₙ) sur le dispositif d'affichage respectif (1) un signal de contrôle est transmis au dispositif informatique de contrôle (3).

12. Procédé selon l'une quelconque des revendications précédentes, **caractérisé en ce que** le moment de l'affichage de l'élément d'affichage (a₁₋ₙ, b₁₋ₙ, c₁₋ₙ, d₁₋ₙ) sur le dispositif d'affichage correspondant (1) est contrôlé par le dispositif informatique de contrôle (3) en fonction du laps de temps déterminé et/ou en fonction du signal de contrôle.
